# EUROPÄISCHE PATENTSCHRIFT

(11) **EP 3 098 917 B1**
(45) Veröffentlichungstag und Bekanntmachung des Hinweises auf die Patenterteilung: **17.10.2018**
(21) Anmeldenummer: 16001162.3
(22) Anmeldetag: 21.05.2016
(51) Int. Cl.: H02G 3/06

(54) **VORRICHTUNG ZUR BEFESTIGUNG EINER LEITUNG**
DEVICE FOR ATTACHING A LINE
DISPOSITIF DE FIXATION D'UNE CONDUITE

(30) Priorität: 26.05.2015 DE 102015006521
(43) Veröffentlichungstag der Anmeldung: 30.11.2016
(73) Patentinhaber: Jacob GmbH, 71394 Kernen (DE)
(72) Erfinder: ZANKL, Martin, 71364 Winnenden (DE)
(74) Vertreter: Jendricke, Susann

(56) Entgegenhaltungen:
- DE-C1- 4 127 162
- DE-C2- 3 640 832
- DE-U1- 29 700 685

## Beschreibung

Die vorliegende Erfindung betrifft eine Vorrichtung zum Befestigen einer Leitung mit einem Grundkörper, mit einer Klemmeinrichtung und mit einer Überwurfmutter, wobei die Überwurfmutter im Betriebszustand die Klemmeinrichtung radial zur Längsachse der Vorrichtung mit Orientierung zur Leitung und in Richtung der Längsachse mit Orientierung zum Grundkörper derart mit Kraft beaufschlagt, dass die Klemmeinrichtung über ihren Klemmbereich radial auf die Leitung gepresst ist und axial über einen Bestandteil in eine Ausnehmung des Grundkörpers unter Ausbildung zumindest eines Dichtbereiches gepresst ist.

Leitungen können schlauchförmig sein und zum Stoff- oder Gastransport dienen oder es kann sich um elektrische Leitungen handeln, insbesondere um solche, die mehrere Kabel enthalten. Derartige Leitungen werden an Behälter, Gehäuse, elektrische Geräte und Einrichtungen, wie Maschinen und Schaltschränken, angeschlossen. Die Vorrichtungen, die die Leitungen befestigen, werden üblicherweise als Kabelverschraubung oder Schlauchverschraubung bezeichnet. Sie werden innerhalb von Öffnungen in der Wand eines Maschinengehäuses oder Behälters oder Schaltschrankes oder dgl. befestigt. Die Leitung wird durch die Vorrichtung hindurchgeführt und wird durch diese gehalten, gegen Zugkräfte gesichert und entlastet. Es wird eine Klemmwirkung auf die Leitung ausgeübt. Die radial nach innen auf die Leitung gerichtete Klemmwirkung wird über einen Innenkonus der Überwurfmutter erreicht, der beim Aufschrauben der Überwurfmutter auf den Grundkörper bspw. Klemmfinger einer Klemmeinrichtung zusammendrückt. Zusätzlich kann auch mindestens eine Dichtung vorgesehen sein, die die Leitung gegen Feuchtigkeit, Spritzwasser im Gehäuse und Staub abdichtet.

Zur dichten Ausführung der Vorrichtung werden Dichtmittel dort platziert, wo verschiedene Bauteile aneinandergrenzen. So ist bspw. die Verwendung eines O-Ringes zwischen der in die Wandöffnung eingesetzten Vorrichtung und dem Gehäuse bekannt. Zwischen Klemmeinrichtung und Leitung ist ein Dichtring vorgesehen und auch im Inneren der Vorrichtung, zwischen Klemmeinrichtung und Grundkörper, wird abgedichtet. Die Erfindung richtet sich auf die Abdichtungssituation zwischen Grundkörper und Klemmeinrichtung im Inneren der Vorrichtung.

Die Druckschriften DE 86 32 001 U1 und DE 36 40 832 C2, die dem Oberbegriff des Anspruchs 1 entspricht, beschäftigen sich eingehend mit der konstruktiven Ausgestaltung der Abdichtung zwischen einer Klemmeinrichtung aus Kunststoff und einem Grundkörper aus Metall. Konkret geht es dort um die Stirnflächengeometrie des Grundkörpers und die Geometrie der Klemmeinrichtung, die gewährleisten sollen, dass die Oberflächenbeschichtung, insbesondere die Verchromung oder Vernickelung, des Grundkörpers nicht beschädigt wird. Schon ganz geringfügige Beschädigungen im gemeinsamen Tauchbad zur Erzeugung der Oberfläche mit anderen Grundkörpern oder auch beim Zusammenwirken mit Klemmeinsätzen aus Kunststoff, können zur Undichtigkeit führen. Um also das Abplatzen der Oberflächenschicht zu vermeiden, ist der Dichtbereich dort einerseits vom Außenumfang des Grundkörpers nach innen verlegt und andererseits ist der Klemmeinrichtung ein Bestandteil in Form einer Gegendichtung zugeordnet. Die zusätzliche Gegendichtung der Klemmeinrichtung liegt wunschgemäß linienförmig an der ringförmigen Dichtfläche des Grundkörpers an oder ist unter Anpressdruck gestaucht und bildet wunschgemäß eine sehr kleine Anlagefläche aus.
Die Gegendichtung ist gemäß den in Rede stehenden Druckschriften am Außenumfang der Klemmeinrichtung angeordnet, gerade dort, wo der geschlitzte Klemmbereich startet und die Lamellen oder Klemmfinger angelenkt sind. Dort ist die radiale Kraftbeaufschlagung spürbar für die umliegenden Bereiche der Vorrichtung, also auch für die dortige Anordnung des Dichtungsbereiches zwischen Klemmeinrichtung und Grundkörper. Der hohe und je nach Leitungsdurchmesser unterschiedliche radiale Anpressdruck und der sich damit ergebenden unterschiedlichen Verformung der Lamellen bzw. des Klemmbereiches radial nach innen führt zu Spannungen und Verformungen und wirkt sich negativ auf die Dichtungsgeometrie zwischen Klemmeinrichtung und Grundkörper aus. Gerade der durch die wunschgemäß linienförmigen, über Kanten erzielten Dichtflächen oder die wunschgemäß kleinen Dichtflächen gebildete Dichtkontakt kann dadurch schnell unterbrochen werden.

Aus der Druckschrift DE 297 00 685 U1 ist eine Kunststoff-Verschraubung für Kabel, Leitungen und Schläuche bekannt, die über einen Klemmeinsatz und einen Dichtungskörper verfügt. Hier reicht der Dichtungskörper zusammen mit dem vom Klemmbereich abgewandten Zungenbereich der Klemmeinrichtung bis zur Stirnfläche des Grundkörpers. Der Dichtungskörper übernimmt die Dichtfunktion, der Zungenbereich der Klemmeinrichtung wird beim Montieren des Kabels im Zuge des Aufschraubens der Überwurfmutter nach innen in Richtung auf die Umfangsfläche des Dichtungskörpers gedrückt, wodurch der Klemmbereich der Klemmeinrichtung in Wirkverbindung mit der Umfangsfläche des Dichtungskörpers gelangen. Der Zungenbereich der Klemmeinrichtung hat jedenfalls keine Dichtfunktion und im montierten Zustand der Leitung besteht zwar Kontakt zum Dichtkörper aber nicht zum Grundkörper.

Die Druckschriften DE 35 19 032 C1 und DE 41 27 162 C1 offenbaren eine Kabelverschraubung mit einem Klemmeinsatz und einer Dichtung sowie einem Grundkörper, der eine Haltehülse für die Dichtung aufweist. Es soll ein radiales Wegdrücken der Dichtung vermieden werden. Die Abdichtung erfolgt hier zwischen Dichtung und Grundkörper. Die Druckschrift DE 35 19 032 C1 zeigt die Vorrichtung, ohne dass ein Kabel oder ein Schlauch montiert ist. Im unbelasteten Zustand der Vorrichtung kontaktiert der Klemmeinsatz die Stirnseite des Grundkörpers, aber beim Verpressen des Klemmeinsatzes wird dieser an die Umfangsfläche der Dichtung gepresst und nimmt die Klemmfunktion wahr, jedoch keine definierte Dichtfunktion. Die Druckschrift DE 41 27 162 C1 zeigt zwar, dass der Klemmeinsatz Kontakt zum Grundkörper und zur Überwurfmutter hat, jedoch geht es stets um die Verformung der Dichtung. Bei beiden in Rede stehenden Druckschriften ist der Kontakt zwischen Klemmeinsatz und Grundkörper ohne Belang und die Dichtfunktion wird allein von der Dichtung wahrgenommen.

Ausgehend von den Druckschriften DE 86 32 001 U1 und DE 36 40 832 C2 liegt der Erfindung die Aufgabe zugrunde, eine Vorrichtung der in Rede stehenden Art anzugeben, die die Abdichtung zwischen Grundkörper und Klemmeinrichtung über die Lebensdauer der Vorrichtung in kostengünstiger Weise aufrechterhält.

Die voranstehende Aufgabe wird durch die Merkmale des Patentanspruches 1 gelöst. Danach ist eine Vorrichtung der in Rede stehenden Art derart ausgestaltet, dass der mit der Ausnehmung des Grundkörpers zusammenwirkende Bestandteil der Klemmeinrichtung das von ihrem Klemmbereich abgewandte freie Ende ist und dass das freie Ende Bestandteil eines hohlzylindrischen Bereiches ist, der sich an den Klemmbereich anschließt.

Zunächst ist erkannt worden, dass bei der aus den Druckschriften DE 86 32 001 U1 und DE 36 40 832 C2 bekannten Vorrichtungen die Dichtwirkung durch Nähe zum Klemmbereich der Klemmeinrichtung und dortigen Kraftflüssen beeinträchtigt werden kann. Weiter ist erkannt worden, dass dort zur Ausbildung des Dichtbereiches ein zusätzlicher Bestandteil in Form einer Gegendichtung erforderlich ist und somit die Vorrichtung verteuert. Erfindungsgemäß ist erkannt worden, dass die Dichtwirkung verbessert werden kann, wenn sich der Dichtbereich weiter entfernt vom Klemmbereich der Klemmeinrichtung befindet. Erfindungsgemäß ist weiter erkannt worden, dass die Kosten reduziert werden können, wenn die Dichtung zum Grundkörper über das vom Klemmbereich abgewandte freie Ende der Klemmeinrichtung realisiert wird. Erfindungsgemäß wird das freie Ende durch einen hohlzylindrischen Bereich der Klemmeinrichtung gebildet, der an den Klemmbereich anschließt. Dieses freie Ende wird in die Ausnehmung des Grundkörpers eingeführt und eröffnet die Möglichkeit der Ausbildung verschiedener Dichtbereiche beabstandet zum Klemmbereich der Klemmeinrichtung, der auf die Leitung einwirkt. Durch die Verlegung der Abdichtung zwischen Grundkörper und Klemmeinrichtung auf das von dem Klemmbereich wegweisenden freien Ende des hohlzylindrischen Bereiches der Klemmeinrichtung wird vermieden, dass sich Verformungen (elastisch und plastisch), die durch das radiale Zusammenpressen des Klemmbereiches verursacht sind, noch bis in den Dichtungsbereich zwischen Klemmeinrichtung und Grundkörper negativ auswirken und dort Undichtigkeiten provozieren. Bei einfachen Ausführungsformen können handelsübliche Klemmeinrichtungen verwendet werden, lediglich die Ausnehmung am Grundkörper ist bei der Fertigung zu berücksichtigen. Eine zusätzliche Gegendichtung, die eine separate Fertigungsform, einen weiteren Fertigungs- oder Montageschritt sowie Materialkosten verursacht, ist nicht erforderlich.

Nach einer besonders bevorzugten und erfindungswesentlichen Ausführungsform könnten ein erster Dichtbereich und ein zweiter Dichtbereich im Sinne einer Doppeldichtung vorgesehen sein, die sich koaxial zur Längsachse der Vorrichtung erstrecken und wobei der erste, äußere Dichtbereich einen zur Längsachse größeren Abstand aufweist und der zweite, innere Dichtbereich einen zur Längsachse geringeren Abstand aufweist. Die doppelte Dichtung bietet eine Redundanzlösung. Beim Versagen eines Dichtbereiches, bspw. durch Ablösen, bleibt der andere Dichtbereich funktionstüchtig und somit die Vorrichtung funktionsfähig. Bei Dichtigkeitsprüfungen unter Einsatz eines Hochdruckreinigers hat sich folgendes herausgestellt: Sollte der zweite, innere Dichtbereich aufgrund eines zu hohen Reinigungsmitteldruckes versagen, bleibt der erste, äußere Dichtbereich in Funktion, da das Medium den ersten, äußeren Dichtbereich mit einem deutlich reduzierten Druck erreicht. Für die Praxis spielt diese Erkenntnis im Hinblick auf die Reinigung von Maschinengehäusen eine Rolle.

Die die Doppeldichtung betreffende bevorzugte Ausführungsform bietet Vorteile, die auf Erkenntnissen beruhen, die bei bisher bekannten Vorrichtungen der in Rede stehenden Art noch keine Rolle gespielt haben.

Die über die Zeit abnehmende Qualität der Dichtwirkung bekannter Vorrichtungen hat nicht nur etwas mit mechanischen Einflüssen zu tun, sondern auch mit der Materialeigenschaft der Relaxation, mit Temperaturschwankungen und Fertigungstoleranzen an Bauteilen.

Als Relaxation wird das Entspannungsverhalten bezeichnet, dass nach der Kraftbeaufschlagung - bspw. einer Klemmeinrichtung aus Kunststoff - eintritt. Die Atomabstände stellen sich zumindest an der Oberfläche des Materials neu ein und ein neues Gleichgewicht wird erlangt. Dabei kann es zur Ablösung der Klemmeinrichtungsdichtfläche von der durch den Grundkörper gebildeten Dichtfläche kommen. Im Zusammenhang mit der bevorzugten Ausbildung eines ersten und zweiten Dichtungsbereiches, die sich koaxial und in unterschiedlichem Abstand zur Längsachse der Vorrichtung erstrecken, ist erkannt worden, dass eine langlebig funktionstüchtige Abdichtung zwischen Grundkörper und Klemmeinrichtung erreicht werden kann, wenn dafür Sorge getragen wird, dass stets zumindest ein Dichtbereich gewährleistet ist. Das Relaxationsverhalten von Kunststoff weist dieselbe Ausrichtung der Atome im Gesamt-Werkstoff auf. Sollte es zu einer Relaxation kommen, die radial zur Längsachse, in das Innere der Vorrichtung weist, könnte es zur Ablösung an dem von der Längsachse weiter beabstandeten ersten, äußeren Dichtbereich kommen, gleichzeitig aber bleibt der zur Längsachse geringer beabstandete zweite, innere Dichtbereich erhalten und wird noch verstärkt. Damit ist die Funktionstüchtigkeit der Abdichtung gewährleistet. Ist die Relaxation axial zur Längsachse orientiert, bleiben die beiden koaxialen Dichtbereiche aufrechterhalten.

Auch die Temperaturschwankungen spielen im Hinblick auf die Funktionstüchtigkeit der Abdichtung eine Rolle und werden von der Doppeldichtung ohne Auswirkung auf die Dichtungsqualität kompensiert. Die Doppeldichtung wirkt folgendermaßen vorteilhaft bei höheren und niedrigeren Temperaturen: Bei höheren Temperaturen nehmen die Dimensionen des Klemmbereiches einer Kunststoff-Klemmeinrichtung bedingt durch den größeren Wärmeausdehnungskoeffizienten in Relation zu einem aus Metall hergestellten Grundkörper im Verhältnis zum Grundkörper zu. Dies hat zur Folge, dass der Anpressdruck am ersten, äußeren Dichtbereich zunimmt und am zweiten, inneren Dichtbereich abnimmt. Bei sinkenden Temperaturen nehmen die Dimensionen des Klemmbereiches einer Kunststoff-Klemmeinrichtung bedingt durch den größeren Wärmeausdehnungskoeffizienten in Relation zu einem aus Metall hergestellten im Verhältnis zum Grundkörper ab. Damit nimmt der Anpressdruck am ersten, äußeren Dichtbereich ab, und am zweiten, inneren Dichtbereich zu.

Die Doppeldichtung hat zudem den Vorteil, dass damit Toleranzen an der Klemmeinrichtung ausgeglichen werden können. Die betrifft insbesondere eine Ringnut zur Aufnahme einer Dichtung im Klemmbereich der Klemmeinrichtung und das freie, in die Ausnehmung des Grundkörpers hineinragende Ende der Klemmeinrichtung. Dies bedeutet, dass der nach der Verpressung herrschende Anpressdruck bei Bauteilen mit Nominalmaßen am ersten, äußeren Dichtbereich und am zweiten, inneren Dichtbereich gleich ist. Ist der Klemmbereich der Klemmeinrichtung relativ zum Grundkörper kleiner, so ist der Anpressdruck am zweiten, inneren Dichtbereich größer und am ersten, äußeren Dichtbereich kleiner. Ist der Klemmbereich der Klemmeinrichtung relativ zum Grundkörper größer, so ist der Anpressdruck am ersten, äußeren Dichtbereich größer und am zweiten, inneren Dichtbereich kleiner. Grob kann angenommen werden, dass die Summe der Dichtungsdrücke unabhängig von der Toleranzlage der Bauteile ist.

Das freie Ende der Klemmeinrichtung und die Ausnehmung des Grundkörpers könnten quer zur Längsachse der Vorrichtung ringförmig ausgebildet sein und korrespondierende Abmessungen aufweisen. Die Ringform ermöglicht eine lückenlos umlaufende Dichtung.

Zu einer zuverlässigen Dichtwirkung über die Lebensdauer der Vorrichtung trägt auch eine vorteilhafte Ausführung bei, wonach das freie Ende der Klemmeinrichtung von der Überwurfmutter im Betriebszustand derart in die Ausnehmung des Grundkörpers gepresst ist, dass eine Verformung des freien Endes und / oder des die Ausnehmung umgebenden Materials des Grundkörpers stattfindet. Dabei könnte das freie Ende der Klemmeinrichtung zumindest bereichsweise geringfügig größer sein als die Ausnehmung, so dass eine intensive Verpressung und Dichtung unter Verformung des freien Endes stattfindet. Die Verformung des Materials erhöht den Anpressdruck. Die Ausnehmung im Grundkörper - sofern härter als die Klemmeinrichtung - begrenzt die Ausbreitung der Verformung des freien Endes. Wenn eine Verformung des die Ausnehmung umgebenden Materials des Grundkörpers stattfindet, so wird eine Voreinstellung des Materials, ggf. durch eine Beschichtung der Ausnehmung eingesetzt, so dass die übrigen Funktionen des Grundkörpers ohne Beeinträchtigung bleiben. Durch den infolge der Verformung hohen erzielten Anpressdruck wird auch bei Relaxation des Kunststoffs über die Lebensdauer genügend Anpressdruck vorhanden sein um die Dichtheit zu gewährleisten.

Bei der Verformung des zumindest bereichsweise geringfügig größeren freien Endes in einer geringfügig kleineren Ausnehmung wird eine Presspassung oder Übermaßpassung ausgebildet. Mit der verbesserten Abdichtung durch die Presspassung und dem damit höheren Anpressdruck sowie erhöhter Reibwirkung geht ein verbesserter Verdrehschutz zwischen Grundkörper und Klemmeinrichtung einher. Der verbesserte Verdrehschutz vermeidet, dass sich beim Aufdrehen der Überwurfmutter der Klemmkörper relativ zum Grundkörper verdreht, was in letzter Konsequenz auch ein Verdrehen der eingesetzten Leitung zur Folge hätte.

Je nach dem, an welchem Bauteil die Verformung stattfindet, kommt das passende weichere Material zum Einsatz. Soll das freie Ende der Klemmeinrichtung verformt werden, so könnte dieses bspw. aus Polypropylen bestehen, während der nicht zu verformende Grundkörper aus einem härten Material, bspw. Polyamid oder Metall, bestehen könnte. Soll das die Ausnehmung umgebende Material des Grundkörpers verformt werden, so könnte dieses bspw. aus Polypropylen bestehen, während das nicht zu verformende freie Ende der Klemmeinrichtung aus einem härten Material, bspw. Polyamid, bestehen könnte. Neben einer klaren Trennung, welches Bauteil bei der axialen Kraftbeaufschlagung durch die Überwurfmutter verformt wird, welches nicht, könnten auch Mischformen existieren, wobei weniger ausgeprägte Härteunterschiede zu ungleichen Verformungen beider Bauteile führen.

In konstruktiver Hinsicht könnte gemäß einem Ausführungsbeispiel der erfindungsgemäßen Vorrichtung ein zu verformendes freies Ende der Klemmeinrichtung im Ruhezustand parallel zur Längsachse der Vorrichtung im gedachten Längsschnitt eine rechteckige U-Kontur aufweisen. Die rechteckige U-Kontur - überführt in die Dreidimensionalität - ergibt eine zur Längsachse radiale Stirndichtfläche sowie eine zylindrische Koaxialdichtfläche. Eine hierzu korrespondierende, nicht zu verformende Ausnehmung des Grundkörpers könnte parallel zur Längsachse der Vorrichtung im gedachten Längsschnitt eine zur Klemmeinrichtung hin divergierende trapezförmige V-Kontur aufweisen. Die divergierende trapezförmige V-Kontur - überführt in die Dreidimensionalität - ergibt eine zur Längsachse radiale Grunddichtfläche sowie eine kegelstumpfförmige Koaxialdichtfläche. Bei dem hier in Rede stehenden Ausführungsbeispiel könnte die Stirndichtfläche des freien Endes der Klemmeinrichtung größer sein als die Grunddichtfläche der Ausnehmung des Grundkörpers. so dass es beim Einpressen des zylindrischen freien Endes der Klemmeinrichtung in die kegelstumpfförmige Ausnehmung des Grundkörpers auf jeden Fall zur Verformung und Presspassung kommt. Bei ausreichender Einpresstiefe könnte zusätzlich ein dritter Dichtbereich zwischen der Stirndichtfläche der Klemmeinrichtung und der Grunddichtfläche des Grundkörpers ausgebildet werden. Weitere Geometrien der ineinandergreifenden Bauteile der Klemmeinrichtung und des Grundkörpers könnten eine Kegelform oder weitere rotationssymmetrische Körper mit oder ohne Abstufungen sein.

Zur Vermeidung von einem Übermaß an Presskraftbeaufschlagung in axialer Richtung könnte der Grundkörper eine Anschlagschulter zur Begrenzung der Einpresstiefe des freien Endes der Klemmeinrichtung in die Ausnehmung des Grundkörpers aufweisen. Gegen die Anschlagschulter könnte sich ein Anschlag der Klemmeinrichtung im Betriebszustand abstützen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung werden auch im allgemeinen bevorzugte Ausgestaltungen und Weiterbildungen der Lehre erläutert. In der Zeichnung zeigen
- Fig. 1: einen Längsschnitt der erfindungsgemäßen Vorrichtung im Zusammenbau vor der axialen Presskraftbeaufschlagung durch die Betätigung der Überwurfmutter,
- Fig. 2: ein Detail DV aus Fig. 1,

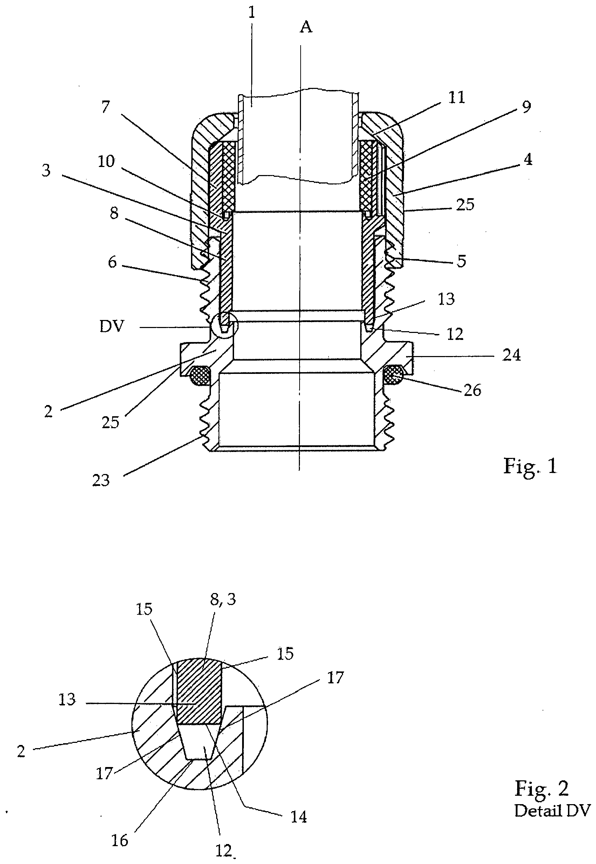

- Fig. 1: einen Längsschnitt der erfindungsgemäßen Vorrichtung im Zusammenbau während der axialen Presskraftbeaufschlagung durch die Betätigung der Überwurfmutter und

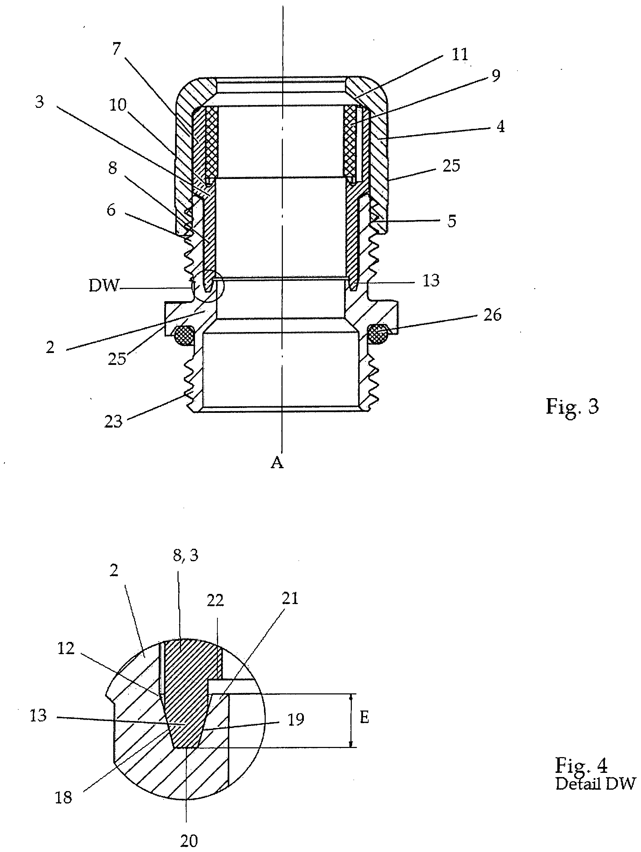

- Fig. 4: ein Detail DW aus Fig. 3.

Die Fig. 1 und 3 zeigen eine Vorrichtung zum Befestigen einer Leitung 1 mit einem Grundkörper 2, mit einer Klemmeinrichtung 3 und mit einer Überwurfmutter 4. Die Überwurfmutter 4 ist mit ihrem Innengewinde 5 auf das Außengewinde 6 des Grundkörpers 2 aufgeschraubt, und nähert sich gemäß den Fig. 3 und 4 der Endstellung ihres Betriebszustandes.

Die Klemmeinrichtung 3 weist an ihrem zur Überwurfmutter 4 weisenden freien Ende einen Klemmbereich 7 auf, der als Lamellenkorb ausgestaltet ist. An den Klemmbereich 7 schließt sich ein hohlzylindrischer Bereich 8 an. An der Innenseite des Klemmbereiches 7 ist eine Dichtung 9 vorgesehen, die an dem zum hohlzylindrischen Bereich 8 benachbarten Ende des Klemmbereiches 7 in eine Ringnut 10 eingreift und im Betriebszustand die Abdichtung der Leitung 1 realisiert. Zur radialen Verpressung des Klemmbereiches 7 weist die Überwurfmutter 4 einen Innenkonus 11 auf, der mit dem vom hohlzylindrischen Bereich 8 wegweisenden freien abgeschrägten Ende des Klemmbereiches 7 korrespondiert. Wird die Überwurfmutter 4 festgezogen, so bewegen sich die biegeelastischen Lamellen des als Lamellenkorb ausgebildeten Klemmbereiches 7 radial zur Längsachse A nach innen. Damit wird die Dichtung 9 zusammengepresst und fixiert die Leitung 1 dichtend und zugentlastend.

Durch das Aufschrauben der Überwurfmutter 4 auf den Grundkörper 2 wird die Klemmeinrichtung 7 in Richtung der Längsachse A gegen den Grundkörper 2 gepresst, der eine Ausnehmung 12 aufweist.

Erfindungsgemäß wird das freie Ende 13 des hohlzylindrischen Bereiches 8 der Klemmeinrichtung 7 dabei in die Ausnehmung 12 des Grundkörpers 2 eingeführt. Das freie Ende 13 der Klemmeinrichtung 3 und die Ausnehmung 12 des Grundkörpers 2 sind quer zur Längsachse A ringförmig ausgebildet und weisen korrespondierende Abmessungen auf.

In Fig. 2 ist ein Detail DV aus Fig. 1 gezeigt, welches die Situation vor der Verpressung und Verformung darstellt. Das freie Ende 13 der Klemmeinrichtung 3 weist im Ruhezustand im Längsschnitt parallel zur Längsachse A eine rechteckige U-Kontur mit einer radialen Stirndichtfläche 14 auf. In der Dreidimensionalität ergibt sich eine zylindrische Koaxialdichtfläche 15, die sich an die Stirndichtfläche 14 anschließt. Das freie Ende 13 ist - als Bestandteil des hohlzylindrischen Bereiches 8 der Klemmeinrichtung 3 - hohlzylindrisch geformt.

Die Ausnehmung 12 des Grundkörpers 2 weist im Längsschnitt parallel zur Längsachse A eine zur Klemmeinrichtung 3 hin divergierende trapezförmige V-Kontur mit einer radialen Grunddichtfläche 16 auf. In der Dreidimensionalität ergibt sich eine kegelstumpfförmige Koaxialdichtfläche 17, an die sich die Grunddichtfläche 16 anschließt. Die Ausnehmung 12 ist ringförmig in zur Überwurfmutter 4 entgegengesetzter Richtung leicht konisch geformt.

Das ringförmig hohlzylindrische freie Ende 13 der Klemmeinrichtung 3 korrespondiert mit der ringförmig, kegelstumpfförmigen Ausnehmung 12 des Grundkörpers 2. Hierbei ist die Breite der in Richtung der Klemmeinrichtung 3 offenen konischen Ausnehmung 12 am zur Klemmeinrichtung 3 weisenden Ende ähnlich der Breite des freien Endes 13 der Klemmeinrichtung 3. Die Stirndichtfläche 14 des freien Endes 13 der Klemmeinrichtung 3 ist geringfügig größer als die Grunddichtfläche 16 der Ausnehmung 12 des Grundkörpers 2.

In Fig. 4 ist ein Detail DW gezeigt, welches die Abdichtsituation der Vorrichtung während der Verpressung, kurz vor Erreichen der Endstellung ihres Betriebszustandes darstellt. Hieraus ist ersichtlich, dass eine Verformung des freien Endes 13 der Klemmeinrichtung 3 stattfindet, dass mehrere Dichtbereiche 18, 19, 20 ausgebildet werden und dass das freie Ende 13 während des Aufschraubens der Überwurfmutter 4 auf den Grundkörper 2 die Kontur der Ausnehmung 12 annimmt. Aufgrund des geringen Konuswinkels der Ausnehmung 12 kann mit geringer axialer Kraftbeaufschlagung in Richtung der Längsachse A eine hohe Anpresskraft der Koaxialdichtfläche 15 auf die Koaxialdichtfläche 17 koaxial und radial zur Längsachse A und damit ein sehr hohes Reibmoment erzielt werden. Die radiale Stirndichtfläche 14 und die dazu korrespondierende Grunddichtfläche 16 tragen über den dritten Dichtbereich 20 im vorliegenden Ausführungsbeispiel zur Dichtung und Verdrehsicherung bei. Ausschlaggebend sind aber die durch die Koaxialdichtflächen 15, 17 ausgebildeten Dichtbereiche 18, 19 - erster, äußerer Dichtbereich 18 und zweiter, innerer Dichtbereich 19 - im Sinne einer Doppeldichtung.

Beim Verpressen und Verformen bilden das freie Ende 13 der Klemmeinrichtung 3 und die Ausnehmung 12 des Grundkörpers 2 im Betriebszustand eine Presspassung aus. Das heißt: Die Abmessungen des freien Endes 13 sind mit fortschreitender Einpresstiefe E größer als die Ausnehmung 12. Diese Maßnahme sichert ab, dass die Koaxialdichtflächen 15, 17 in der Betriebsstellung eine hohe Anpresskraft ausüben. Die Presspassung ist im vorliegenden Ausführungsbeispiel so ausgelegt, dass die Verdrehsicherung zwischen der Klemmeinrichtung 3 und dem Grundkörper 2 gewährleistet ist. Der hohe Anpressdruck, der über die Koaxialdichtfläche 15 auf die Koaxialdichtfläche 17 aufgebracht wird, führt zu einem hohen Reibmoment, das ausreichend ist, um auf zusätzlichen Verdrehschutz zu verzichten.

Die Dichtbereiche 18, 19 und 20 werden während des Verpressens, Verformens ausgebildet. Der erste, äußere Dichtbereich 18 und der zweite, innere Dichtbereich 19 werden durch die Koaxialdichtfläche 15 des freien Endes 13 und durch die Koaxialdichtfläche 17 der Ausnehmung 12 gebildet und erstrecken sich koaxial zur Längsachse A. Der erste, äußere Dichtbereich 18 weist einen zur Längsachse A größeren Abstand auf, als der zweite, innere Dichtbereich 19. Bei unerwünschter Unterbrechung eines Dichtbereiches 18, 19 in radialer Richtung, unabhängig davon mit welcher Orientierung nach innen oder außen, bleibt der jeweils andere Dichtbereich 18, 19 funktionstüchtig. Der dritte Dichtbereich 20 verläuft radial zur Längsachse A

Das zu verformende freie Ende 13 der Klemmeinrichtung 3 besteht aus Polypropylen. Dieses Material ist weicher als das Material des Grundkörpers 2, der im vorliegenden Ausführungsbeispiel aus Metall besteht.

Zur Begrenzung der Einpresstiefe E weist der Grundkörper 2 eine Anschlagschulter 21 auf, gegen die sich ein Anschlag 22 der Klemmeinrichtung 3 nach Erreichen des Betriebszustandes abstützt. In Fig. 4 ist die Dichtsituation noch nicht vollendet dargestellt. Wenn der Anschlag 22 auf der Anschlagschulter 21 aufliegt, ist die Ausnehmung 12 ausgefüllt und ein weiterer radialer Dichtbereich zwischen Anschlag 22 und Anschlagschulter 21 entsteht.

Der hohlzylindrische Grundkörper 2 weist neben dem Gewinde 6 zur Befestigung der Überwurfmutter 4 ein weiteres Gewinde 23 zur Befestigung einer hier nicht dargestellten Gegenmutter zur Fixierung der Vorrichtung in der Wandöffnung eines hier ebenfalls nicht dargestellten Schaltschranks auf. Zudem umfasst der Grundkörper 2 einen Flansch 24 mit einem Außensechskant 25, der zum Halten des Grundkörpers 2 bei der Montage von Überwurfmutter 4 und Gegenmutter während der Anordnung der Vorrichtung in der Wandöffnung dient. Auch die Überwurfmutter 4 verfügt über einen Außensechskant 25. Am Flansch 24 ist ein nicht näher bezeichneter Freistich zur Aufnahme eines dichtenden O-Rings 26 zur Abdichtung des Schaltschrankes nach außen vorgesehen. Die dem Außengewinde 6 des Grundkörpers 2 radial zur Längsachse A gegenüberliegende Innenwandung korrespondiert mit dem in den Grundkörper 2 eingeführten hohlzylindrischen Bereich 8 der Klemmeinrichtung 3 und führt diesen. Die an das Innengewinde 5 der Überwurfmutter 4 axial anschließende Innenwandung korrespondiert mit dem Klemmbereich 7 der Klemmeinrichtung 3 und führt diesen.

## Patentansprüche

1. Vorrichtung zum Befestigen einer Leitung (1) mit einem Grundkörper (2), mit einer Klemmeinrichtung (3) und mit einer Überwurfmutter (4), wobei die Überwurfmutter (4) im Betriebszustand die Klemmeinrichtung (3) radial zur Längsachse (A) der Vorrichtung mit Orientierung zur Leitung (1) und in Richtung der Längsachse (A) mit Orientierung zum Grundkörper (2) derart mit Kraft beaufschlagt, dass die Klemmeinrichtung (3) über ihren Klemmbereich (7) radial auf die Leitung (1) gepresst ist und axial über einen Bestandteil in eine Ausnehmung (12) des Grundkörpers unter Ausbildung zumindest eines Dichtbereiches (18, 19, 20) gepresst ist,
**dadurch gekennzeichnet,**
**dass** der mit der Ausnehmung (12) des Grundkörpers (2) zusammenwirkende Bestandteil der Klemmeinrichtung (3) das von ihrem Klemmbereich (7) abgewandte freie Ende (13) ist und dass das freie Ende (13) Bestandteil eines hohlzylindrischen Bereiches (8) ist, der sich an den Klemmbereich (7) anschließt.

2. Vorrichtung nach Anspruch 1, **dadurch gekennzeichnet, dass** ein erster Dichtbereich (18) und ein zweiter Dichtbereich (19) vorgesehen sind, die sich koaxial zur Längsachse (A) erstrecken und wobei der erste, äußere Dichtbereich (18) einen zur Längsachse (A) größeren Abstand aufweist und der zweite, innere Dichtbereich (19) einen zur Längsachse (A) geringeren Abstand aufweist.

3. Vorrichtung nach Anspruch 1 oder 2, **dadurch gekennzeichnet, dass** das freie Ende (13) der Klemmeinrichtung (3) und die Ausnehmung (12) des Grundkörpers (2) quer zur Längsachse (A) ringförmig ausgebildet und korrespondierende Abmessungen aufweisen.

4. Vorrichtung nach Anspruch 3, **dadurch gekennzeichnet, dass** das freie Ende (13) der Klemmeinrichtung (3) von der Überwurfmutter (4) im Betriebszustand derart in die Ausnehmung (12) des Grundkörpers (2) gepresst ist, dass eine Verformung des freien Endes (13) und / oder des die Ausnehmung (12) umgebenden Materials des Grundkörpers (2) stattfindet.

5. Vorrichtung nach Anspruch 4, **dadurch gekennzeichnet, dass** das freie Ende (13) der Klemmeinrichtung (3) und die Ausnehmung (12) des Grundkörpers (2) im Betriebszustand eine Presspassung ausbilden, wobei die Presspassung vorzugsweise so ausgelegt ist, dass eine Verdrehsicherung zwischen der Klemmeinrichtung (3) und dem Grundkörper (2) gewährleistet ist.

6. Vorrichtung nach Anspruch 4 oder 5, **dadurch gekennzeichnet, dass** ein zu verformendes freies Ende (13) der Klemmeinrichtung (3) aus einem gegenüber dem, insbesondere aus Polyamid oder Metall bestehenden, Material des Grundkörpers (2) weicheren Material, insbesondere Polypropylen, gefertigt ist, oder dass das zu verformende, die Ausnehmung umgebende Material des Grundkörpers aus einem gegenüber dem, insbesondere aus Polyamid bestehenden, Material der Klemmeinrichtung weicheren Material, insbesondere Polypropylen, gefertigt ist.

7. Vorrichtung nach einem der Ansprüche 1 bis 6, wobei das freie Ende (13) im Betriebszustand verformt ist, **dadurch gekennzeichnet, dass** das freies Ende (13) der Klemmeinrichtung (3) im Ruhezustand eine zur Längsachse (A) radiale Stirndichtfläche (14) sowie eine zylindrische Koaxialdichtfläche (15) aufweist.

8. Vorrichtung nach Anspruch 6 oder 7, wobei das die Ausnehmung (12) umgebende Material nicht verformt ist, **dadurch gekennzeichnet, dass** die Ausnehmung (12) des Grundkörpers (2) eine zur Längsachse (A) radiale Grunddichtfläche (16) sowie eine kegelstumpfförmige Koaxialdichtfläche (17), aufweist, die in Richtung Klemmeinrichtung (3) divergiert.

9. Vorrichtung nach Anspruch 8, **dadurch gekennzeichnet, dass** die Stirndichtfläche (14) des freien Endes (13) der Klemmeinrichtung (3) größer ist als die Grunddichtfläche (16) der Ausnehmung (12) des Grundkörpers (2) und dass die Stirndichtfläche (14) und die Grunddichtfläche (16) einen dritten Dichtbereich (20) ausbilden.

10. Vorrichtung nach einem der Ansprüche 1 bis 9, **dadurch gekennzeichnet, dass** der Grundkörper (2) eine Anschlagschulter (21) zur Begrenzung der Einpresstiefe (E) des freien Endes (13) der Klemmeinrichtung (3) in die Ausnehmung (12) des Grundkörpers (2) aufweist, gegen die sich ein Anschlag (22) der Klemmeinrichtung (3) im Betriebszustand abstützt.

## Claims

1. Device for fastening a line (1) with a basic body (2), with a clamping device (3) and with a union nut (4) wherein in the operating state the union nut (4) exerts such a force on the clamping device (3) radially to the longitudinal axis (A) of the device orientated towards the line (1) and in the direction of the longitudinal axis (A) orientated towards the basic body (2) that the clamping device (3) is pressed radially over its clamping area (7) onto the line (1) and is pressed axially over a constituent part into a recess (12) of the basic body forming at least one sealing area (18, 19, 20),
**characterised in that** the constituent part of the clamping device (3) interacting with the recess (12) of the basic body (2) is its free end (13) facing away from its clamping area (7) and **in that** the free end (13) is a constituent part of a hollow cylindrical area (8) which adjoins the clamping area (7).

2. Device according to claim 1 **characterised in that** a first sealing area (18) and a second sealing area (19) are provided which extend coaxially to the longitudinal axis (A) and wherein the first, outer sealing area (18) is at a greater distance from the longitudinal axis (A) and the second, inner sealing area (19) is at a smaller distance from the longitudinal axis (A).

3. Device according to claim 1 or 2 **characterised in that** the free end (13) of the clamping device (3) and the recess (12) of the basic body (2) have annularly formed and corresponding dimensions perpendicular to the longitudinal body (A).

4. Device according to claim 3 **characterised in that** the free end (13) of the clamping device is pressed by the union nut (4) in the operating state into the recess (12) of the basic body (2) in such a way that deformation of the free end (13) and/or the material of the basic body (2) surrounding the recess (12) takes place.

5. Device according to claim 4 **characterised in that** in the operating state the free end (13) of the clamping device (3) and the recess (12) of the basic body (2) form a press fit, wherein the press fit is preferably such that security against twisting between the clamping device (3) and the basic body (2) is guaranteed.

6. Device according to claim 4 or 5 **characterised in that** a free end (13) of the clamping device (3) that is to be deformed is made of a softer material, in particular polypropylene, than the material of the basic body (2), consisting, in particular, of polyamide or metal, or **in that** the material of the basic body surrounding the recess is made of a softer material, in particular polypropylene, than the material of the clamping device, consisting, in particular, of polyamide.

7. Device according to any one of claims 1 to 6, wherein the free end (13) is deformed in the operating state, **characterised in that** the free end (13) of the clamping device (3) in the rest state has a radial end sealing surface (14) and a cylindrical coaxial sealing surface (15) with regard to the longitudinal axis (A).

8. Device according to claim 6 or 7 wherein the material surrounding the recess (12) is not deformed, **characterised in that** the recess (12) of the basic body (2) comprises a basic sealing surface (16) radial to the longitudinal axis (A) as well as a truncated cone-shaped coaxial sealing surface (17) which diverges in the direction of the clamping device (3).

9. Device according to claim 8 **characterised in that** the end sealing surface (14) of the free end (13) of the clamping device (3) is larger than the basic sealing surface (16) of the recess (12) of the basic body (2) and **in that** the end sealing surface (14) and the basic sealing surface (16) form a third sealing area (20).

10. Device according to any one of claims 1 to 9 **characterised in that** the basic body (2) comprises a contact collar (21), to limit the press-in depth (E) of the free end (13) of the clamping device (3) in to the recess (12) of the basic body (2), on which is supported a stop (22) of the clamping device (3) in the operating state.

## Revendications

1. Dispositif pour la fixation d'une conduite (1) à un corps de base (2), avec un dispositif de serrage (3) et avec un écrou d'accouplement (4), dans lequel, à l'état de fonctionnement, l'écrou d'accouplement (4) exerce une force sur le dispositif de serrage (3) radialement à l'axe longitudinal (A) du dispositif avec une orientation vers la conduite (1) et en direction de l'axe longitudinal (A) avec une orientation vers le corps de base (2) de telle sorte que le dispositif de serrage (3) est pressé via sa zone de serrage (7) de manière radiale sur la conduite (1) et est pressé axialement via une partie constitutive dans un évidement (12) du corps de base en formant au moins une zone d'étanchéité (18, 19, 20),
**caractérisé en ce que** la partie constitutive du dispositif de serrage (3) coopérant avec l'évidement (12) du corps de base (2) est l'extrémité libre (13) tournant le dos à sa zone de serrage (7) et que l'extrémité libre (13) est une partie constitutive d'une zone cylindrique creuse (8) en jonction avec la zone de serrage (7).

2. Dispositif selon la revendication 1, **caractérisé en ce qu'**une première zone d'étanchéité (18) et une deuxième zone d'étanchéité (19) sont prévues, lesquelles s'étendent coaxialement à l'axe longitudinal (A) et dans lequel la première zone d'étanchéité extérieure (18) présente une plus grande distance par rapport à l'axe longitudinal (A) et la deuxième zone d'étanchéité intérieure (19) présente une plus petite distance par rapport à l'axe longitudinal (A).

3. Dispositif selon la revendication 1 ou 2, **caractérisé en ce que** l'extrémité libre (13) du dispositif de serrage (3) et l'évidement (12) du corps de base (2) sont réalisés avec une forme annulaire transversalement à l'axe longitudinal (A) et présentent des dimensions correspondantes.

4. Dispositif selon la revendication 3, **caractérisé en ce qu'**à l'état de fonctionnement, l'extrémité libre (13) du dispositif de serrage (3) est pressée par l'écrou d'accouplement (4) dans l'évidement (12) du corps de base (2) de telle sorte qu'une déformation de l'extrémité libre (13) et/ou du matériau entourant l'évidement (12) du corps de base (2) a lieu.

5. Dispositif selon la revendication 4, **caractérisé en ce que** l'extrémité libre (13) du dispositif de serrage (3) et l'évidement (12) du corps de base (2) forment un ajustement serré à l'état de fonctionnement, dans lequel l'ajustement serré est de préférence étudié de manière à ce qu'une protection contre la torsion soit assurée entre le dispositif de serrage (3) et le corps de base (2).

6. Dispositif selon la revendication 4 ou 5, **caractérisé en ce qu'**une extrémité libre (13) à déformer du dispositif de serrage (3) est fabriquée en un matériau plus tendre, en particulier du polypropylène, par rapport au matériau du corps de base (2) se composant en particulier de polyamide ou de métal, ou bien que le matériau à déformer entourant l'évidement du corps de base est fabriqué en un matériau plus tendre, en particulier du polypropylène, par rapport au matériau du dispositif de serrage se composant en particulier de polyamide.

7. Dispositif selon l'une des revendications 1 à 6, dans lequel l'extrémité libre (13) est déformée à l'état de fonctionnement, **caractérisé en ce que** l'extrémité libre (13) du dispositif de serrage (3) présente, à l'état de repos, une surface d'étanchéité frontale (14) radiale par rapport à l'axe longitudinal (A) ainsi qu'une surface d'étanchéité coaxiale cylindrique (15).

8. Dispositif selon la revendication 6 ou 7, dans lequel le matériau entourant l'évidement (12) n'est pas déformé, **caractérisé en ce que** l'évidement (12) du corps de base (2) présente une surface d'étanchéité de base (16) radiale par rapport à l'axe longitudinal (A) ainsi qu'une surface d'étanchéité coaxiale tronconique (17) qui diverge en direction du dispositif de serrage (3).

9. Dispositif selon la revendication 8, **caractérisé en ce que** la surface d'étanchéité frontale (14) de l'extrémité libre (13) du dispositif de serrage (3) est plus grande que la surface d'étanchéité de base (16) de l'évidement (12) du corps de base (2) et que la surface d'étanchéité frontale (14) et la surface d'étanchéité de base (16) forment une troisième zone d'étanchéité (20).

10. Dispositif selon l'une des revendications 1 à 9, **caractérisé en ce que** le corps de base (2) présente un épaulement de butée (21) pour la délimitation de la profondeur d'enfoncement par pression (E) de l'extrémité libre (13) du dispositif de serrage (3) dans l'évidement (12) du corps de base (2), contre lequel une butée (22) du dispositif de serrage (3) est en appui à l'état de fonctionnement.
